# EUROPÄISCHE PATENTSCHRIFT

(11) **EP 1 373 033 B1**
(45) Veröffentlichungstag und Bekanntmachung des Hinweises auf die Patenterteilung: **11.01.2006**
(21) Anmeldenummer: 02732494.6
(22) Anmeldetag: 16.03.2002
(51) Int. Cl.: B60S 1/08

(54) **SENSOR ZUR DETEKTION VON SCHMUTZ UND/ODER FEUCHTIGKEIT AUF EINER AUSSENSEITE EINER SCHEIBE**
SENSOR FOR DETECTING FILTH AND/OR HUMIDITY ON THE OUTER SIDE OF A GLASS PANE
CAPTEUR POUR DETECTER DES SALISSURES ET/OU L'HUMIDITE SUR LA FACE EXTERIEURE D'UNE VITRE

(30) Priorität: 06.04.2001 DE 10117397
(43) Veröffentlichungstag der Anmeldung: 02.01.2004
(73) Patentinhaber: VALEO SYSTEMES D'ESSUYAGE, 78321 La Verrière (FR)
(72) Erfinder: SCHULER, Thomas, 75446 Wiernsheim (DE); SCHUHMACHER, Tobias, 71665 Vaihingen-Horrheim (DE)
(74) Vertreter: Croonenbroek, Thomas Jakob
(86) Internationale Anmeldenummer: PCT/EP2002/002935
(87) Internationale Veröffentlichungsnummer: WO 2002/081272

(56) Entgegenhaltungen:
- WO-A-00/78582
- DE-A- 4 403 221
- FR-A- 2 772 479

## Beschreibung

Die vorliegende Erfindung betrifft einen Sensor zur Detektion von Schmutz und oder Feuchtigkeit auf einer Außenseite eines optisch durchlässigen Körpers. Der Sensor ist auf der Innenseite des Körpers angeordnet und weist mehrere optische Sendeelemente und mindestens ein optisches Empfangselement auf. Die Sendeelemente sind zu mindestens zwei Sendezweigen zusammengefasst, die zusammen mit dem mindestens einen Empfangselement in einem Regelkreis geschaltet sind. Der Regelkreis sorgt für eine zweigweise Variation der Sendeleistung der Sendeelemente mit dem Ziel, die Lichtleistung der von dem Empfangselement empfangenen, von dem mindestens einen Sendeelement des ersten Sendezweigs ausgesandten und an der Außenseite des optisch durchlässigen Körpers reflektierten Strahlen gleich der Lichtleistung der von dem Empfangselement empfangenen, von dem mindestens einen Sendeelement des zweiten Sendezweigs ausgesandten reflektierten Strahlen zu regeln.

Die Erfindung betrifft außerdem ein Verfahren zum Betrieb eines Sensors zur Detektion von Schmutz und/oder Feuchtigkeit auf einer Außenseite eines optisch durchlässigen Körpers. Der Sensor weist mehrere optische Sendeelemente und mindestens ein Empfangselement auf. Bei dem Verfahren werden die Sendeelemente zu zwei mindestens Sendezweigen zusammengefasst, die zusammen mit dem mindestens einen Empfangselement in einem Regelkreis geschaltet werden. Durch den Regelkreis wird die Sendeleistung der Sendeelemente mit dem Ziel zweigweise variiert, die Lichtleistung der von dem Empfangselement empfangenen, von dem mindestens einen Sendeelement des ersten Sendezweigs ausgesandten und an der Außenseite des optisch durchlässigen Körpers reflektierten Strahlen gleich der Lichtleistung der von dem Empfangselement empfangenen, von dem mindestens einen Sendeelement des zweiten Sendezweigs ausgesandten reflektierten Strahlen zu regeln.

Die vorliegende Erfindung betrifft des weiteren ein Speicherelement für ein Steuergerät eines Sensors zur Detektion von Schmutz und/oder Feuchtigkeit auf einem optisch durchlässigen Körper. Auf dem Speicherelement ist ein Computerprogramm abgespeichert, das auf einem Rechengerät, insbesondere auf einem Mikroprozessor, ablauffähig ist. Als Speicherelement kann insbesondere ein Read-Only-Memory, ein Random-Access-Memory oder ein Flash-Memory zur Anwendung kommen.

Schließlich betrifft die Erfindung ein Steuergerät für einen Sensor zur Detektion von Schmutz und/oder Feuchtigkeit auf einem optisch durchlässigen Körper. Das Steuergerät umfasst ein Rechengerät, insbesondere einen Mikroprozessor, und ein Speicherelement. Der Sensor weist mehrere optische Sendeelemente und mindestens ein Empfangselement auf, wobei die Sendeelemente zu mindestens zwei Sendezweigen zusammengefasst sind, die zusammen mit dem mindestens einen Empfangselement in einem Regelkreis geschaltet sind. Der Regelkreis sorgt für eine zweigweise Variation der Sendeleistung der Sendeelemente mit dem Ziel, die Lichtleistung der von dem Empfangselement empfangenen, von dem mindestens einen Sendeelement des ersten Sendezweigs ausgesandten und an der Außenseite des optisch durchlässigen Körpers reflektierten Strahlen gleich der Lichtleistung der von dem Empfangselement empfangenen, von dem mindestens einen Sendeelement des zweiten Sendezweigs ausgesandten reflektierten Strahlen zu regeln.

Sensoren der eingangs genannten Art sind aus dem Kraftfahrzeugbereich in unterschiedlichen Ausführungsformen zur Detektion von Regentropfen auf der Außenseite einer Fahrzeugscheibe bekannt. Die Sendeelemente der bekannten Sensoren sind derart ausgerichtet, dass ein Großteil der von den Sendeelementen ausgesandten optischen Strahlen ohne Feuchtigkeitstropfen an der Außenseite der Scheibe auf das Empfangselement reflektiert wird. Die von den Sendeelementen ausgesandten optischen Strahlen werden beim Auftreffen auf Feuchtigkeitstropfen auf der Außenseite der Scheibe zumindest teilweise aus der Scheibe ausgekoppelt und treffen somit nicht auf das Empfangselement.

Bei den bekannten Sensoren sind üblicherweise jeweils mehrere Sendeelemente zu zwei Sendezweigen zusammengefasst. Die Sendeelemente der zwei Sendezweige werden abwechselnd mit Rechteckimpulsen einer Frequenz von ca. 31 kHz angesteuert und senden abwechselnd entsprechende optische Strahlen im Infrarot (IR)-Bereich aus. Es ist ein Empfangselement vorgesehen, das abwechselnd Lichtstrahlen, die von den Sendeelementen des ersten Sendezweigs ausgesandt wurden, und Lichtstrahlen empfängt, die von den Sendeelementen des zweiten Sendezweigs ausgesandt wurden (sog. Synchrondemodulation). Zwischen beiden Zweigen wird aus den jeweils empfangenen Signalen eine Differenz gebildet. Das Differenzsignal wird von einer geeigneten Empfängerschaltung ausgewertet. Die Empfängerschaltung erzeugt ein pulsweitenmoduliertes (PWM)-Signal, das Informationen über Größe und Anzahl der auf der Außenseite der Scheibe vorhandenen Regentropfen enthält.

Die Empfängerschaltung und die Ansteuerung der beiden Sendezweige sind in einem Regelkreis geschaltet. Der Regelkreis sorgt für eine Variation der Sendeleistung der Sendeelemente mit dem Ziel, die Lichtleistung der von dem Empfangselement empfangenen, von den Sendeelementen des ersten Sendezweigs ausgesandten und an der Außenseite der Scheibe reflektierten Strahlen gleich der Lichtleistung der von dem Empfangselement empfangenen, von den Sendeelementen des zweiten Sendezweigs ausgesandten und reflektierten Strahlen zu regeln. Die Regelung dient zum Ausregeln von Störeinflüssen auf die Regenerkennung. Störeinflüsse können bspw. Kratzer auf der Scheibe oder eine Alterung der elektrischen Bauteile des Sensors sein. Die Regelung der Lichtleistung ist relativ langsam (etwa 4 Hz), damit einerseits langsame dynamische Veränderungen ausgeregelt werden, andererseits aber schnelle dynamische Veränderungen aufgrund von Regentropfen auf der Scheibe nach wie vor detektierbar sind. Die Regelung bewirkt, dass der Sensor stets in seinem Arbeitspunkt betrieben wird, wodurch die Detektionsgenauigkeit und -zuverlässigkeit erhöht wird.

Der Stand der Technik wird z.B. durch DE 44 03 221 dokumentiert.

Der bekannte Sensor hat jedoch den Nachteil, dass Vorgänge mit einer sehr geringen Dynamik, die fast schon als statische Vorgänge bezeichnet werden können, wie bspw. eine sich über Minuten, Stunden oder gar Tage auf der Scheibe bildende Schmutzschicht, durch die Regelung ausgeregelt werden und deshalb nicht detektiert werden können.

Der vorliegenden Erfindung liegt die Aufgabe zugrunde, eine Möglichkeit zu schaffen, mit einem Sensor der eingangs genannten Art auch Vorgänge mit einer sehr geringen Dynamik sicher und zuverlässig detektieren zu können.

Zur Lösung dieser Aufgabe schlägt die Erfindung ausgehend von dem Sensor der eingangs genannten Art vor, dass der Sensor Mittel zum Abspeichern von Ausgangswerten für Ansteuersignale für die Sendeelemente vor dem Betrieb des Sensors und Mittel zum Ermitteln einer statischen Regelabweichung aus der Differenz der aktuellen Werte für die Ansteuersignale und der abgespeicherten Ausgangswerte während des Betriebs des Sensors aufweist.

Der erfindungsgemäße Sensor umfasst mehrere zu Sendezweigen zusammengefasste Sendeelemente und mindestens ein Empfangselement, das die von den Sendeelementen ausgesandten und an der Außenseite des Körpers reflektierten optischen Strahlen empfängt. Die Ansteuerung der Sendeelemente und die Empfangselektronik sind Teil eines Regelkreises zur Regelung der Leistung der empfangenen Lichtstrahlen durch Variation der Ansteuersignale für die Sendeelemente. Durch diese Regelung werden Vorgänge mit einer langsamen Dynamik (z.B. Auswirkungen einer Bauteilalterung oder Auswirkungen von Kratzern auf dem optisch durchlässigen Körper) ausgeregelt.

Zusätzlich werden bei dem erfindungsgemäßen Sensor die Ausgangswerte der Ansteuersignale vor dem Betrieb des Sensors erfasst und abgespeichert. Während des Betriebs des Sensors treten langsame dynamische Veränderungen auf, die ausgeregelt werden. Nach außen hin bleibt also die Lichtleistung der von den Sendezweigen empfangenen Lichtstrahlen trotz Störungen bis auf eine dynamische Regelabweichung im wesentlichen konstant. Die dynamische Regelabweichung wird jedoch innerhalb kurzer Zeit ausgeregelt. Um trotz der auf die Sendezweige unterschiedlich wirkenden Störungen die Lichtleistung der Sendezweige auf einem im wesentlichen gleichen Niveau zu halten, werden die Sendeelemente der Sendezweige mit unterschiedlichen Ansteuersignalen angesteuert. Intern kommt es also zu einer statischen Regelabweichung, die sich aus der Differenz der abgespeicherten Ausgangswerte und der aktuellen Werte der Ansteuersignale ergibt. Erfindungsgemäß wird die statische Regelabweichung zur Detektion von sehr langsamen dynamischen Vorgängen herangezogen. Die statische Regelabweichung ermöglicht eine sichere und zuverlässige Aussage über das Vorhandensein von sehr langsamen Vorgängen.

Während des Betriebs des Sensors kann es von Zeit zu Zeit erforderlich sein, neue Ausgangswerte für die Ansteuersignale zu speichern, d.h. den Sensor zu kalibrieren. Auf diese Weise kann verhindert werden, dass Kratzer auf dem optisch durchlässigen Körper oder eine Bauteilalterung, die ebenfalls zu einer statischen Regelabweichung führen, eine falsche Detektion von Schmutzpartikeln auf der Außenseite des Körpers verursachen. In den neu abgespeicherten Ausgangswerten sind die Auswirkungen von Kratzern oder Bauteilalterung auf die Lichtleistung der empfangenen Strahlen berücksichtigt.

Der Sensor kann entweder in regelmäßigen zeitlichen Abständen oder ereignisgesteuert kalibriert werden. Wenn bspw. verschiedene Massnahmen zur Reinigung und/oder Trocknung einer Scheibe eines Kraftfahrzeugs (z.B. Wischen, Spritzen, Intensivreinigung, etc.) ohne Erfolg bleiben, könnte die ermittelte stationäre Regelabweichung ihre Ursache nicht in einer Verschmutzung der Scheibe, sondern bpsw. in Kratzern auf der Scheibe oder einer Alterung der Sensorbauteile haben. Ein Kalibrieren des Sensors kann in einer solchen Situation Abhilfe schaffen.

Gemäß einer vorteilhaften Weiterbildung der vorliegenden Erfindung wird vorgeschlagen, dass mindestens ein Sendeelement des ersten Sendezweigs derart ausgerichtet ist, dass ein Großteil der von dem Sendeelement ausgesandten optischen Strahlen ohne Feuchtigkeitstropfen an der Außenseite des Körpers auf das mindestens eine Empfangselement reflektiert wird, und mindestens ein Sendeelement des zweiten Sendezweigs derart ausgerichtet ist, dass ein Großteil der von dem weiteren.Sendeelement ausgesandten optischen Strahlen ohne Schmutzpartikel auf der Außenseite des Körpers an der Außenseite aus dem Körper ausgekoppelt wird. Gemäß dieser Weiterbildung des erfindungsgemäßen Sensors dienen also ein Teil der Sendeelemente des ersten Sendezweigs zur Detektion von Feuchtigkeitstropfen auf der Außenseite der Scheibe und ein anderer Teil der Sendeelemente des zweiten Sendezweigs zur Detektion von sehr langsamen dynamischen Vorgängen, wie bspw. einer Verschmutzung auf der Außenseite einer Scheibe.

Gemäß einer bevorzugten Ausführungsform der Erfindung wird vorgeschlagen, dass die von dem mindestens einen Sendeelement ausgesandten optischen Strahlen beim Auftreffen auf Feuchtigkeitstropfen auf der Außenseite des Körpers zumindest teilweise aus dem Körper ausgekoppelt werden.

Gemäß einer weiteren bevorzugten Ausführungsform der Erfindung wird vorgeschlagen, dass die von dem mindestens einen weiteren Sendeelement ausgesandten optischen Strahlen beim Auftreffen auf Schmutzpartikel auf der Außenseite des Körpers zumindest teilweise an der Außenseite des Körpers auf das mindestens eine Empfangselement reflektiert werden.

Vorteilhafterweise sind in dem ersten Sendezweig diejenigen Sendeelemente zusammengefasst, die derart ausgerichtet sind, dass ein Großteil der von diesen Sendeelementen ausgesandten optischen Strahlen ohne Feuchtigkeitstropfen an der Außenseite des Körpers auf das mindestens eine Empfangselement reflektiert wird, und in dem zweiten Sendezweig die weiteren Sendeelemente zusammengefasst, die derart ausgerichtet sind, dass ein Großteil der von den weiteren Sendeelementen ausgesandten optischen Strahlen ohne Schmutzpartikel auf der Außenseite des Körpers an der Außenseite aus dem Körper ausgekoppelt wird. Demnach sind also diejenigen Sendeelemente, die zur Detektion von Feuchtigkeitstropfen dienen, in dem ersten Sendezweig zusammengefasst und diejenigen Sendeelemente, die zur Detektion von Schmutzpartikeln dienen, in dem zweiten Sendezweig zusammengefasst.

Um auch bei einer sauberen Scheibe ohne Schmutzpartikel auf der Scheibe in dem zweiten Sendezweig einen geschlossenen Regelkreis zu haben, sollten auch bei einer sauberen Scheibe Lichtstrahlen von mindestens einem der Sendeelemente des zweiten Sendezweigs zu dem Empfangselement gelangen. Dazu wird vorgeschlagen, dass in dem zweiten Sendezweig mindestens ein zusätzliches Sendeelement vorgesehen ist, das derart ausgerichtet ist, dass ein Anteil der von dem zusätzlichen Sendeelement ausgesandten optischen Strahlen ohne Schmutzpartikel an der Außenseite des Körpers auf das mindestens eine Empfangselement reflektiert wird. Die Lichtstrahlen der übrigen Sendeelemente des zweiten Sendezweigs werden bei sauberer Scheibe größtenteils aus der Scheibe ausgekoppelt.

Gemäß einer anderen vorteilhaften Weiterbildung der vorliegenden Erfindung wird vorgeschlagen, dass die Sendeelemente einzeln oder zu mehreren nacheinander optische Strahlen aussenden und das oder jedes Empfangselement synchron zum Aussenden der optischen Strahlen durch die sendenden Sendeelemente an der Außenseite des optisch durchlässigen Körpers reflektierte Strahlen empfängt und diese einer Auswertung zuführt. Der Betrieb eines Sensors mit einem Empfangselement, das zum abwechselnden Empfangen von Lichtstrahlen der Sendeelemente des ersten Sendezweigs und von Lichtstrahlen der Sendeelemente des zweiten Sendezweigs synchron zum Senden der Lichtstrahlen durch die Sendeelemente umgeschaltet wird, wird auch als Synchrondemodulation bezeichnet.

Als eine weitere Lösung der Aufgabe der vorliegenden Erfindung wird ausgehend von dem Verfahren der eingangs genannten Art vorgeschlagen, dass vor dem Betrieb des Sensors Ausgangswerte für Ansteuersignale für die Sendeelemente abgespeichert werden und während des Betriebs des Sensors eine statische Regelabweichung aus der Differenz der aktuellen Werte für die Ansteuersignale und der Ausgangswerte ermittelt wird.

Von besonderer Bedeutung ist die Realisierung des erfindungsgemäßen Verfahrens in der Form eines Speicherelements, das für ein Steuergerät eines Sensors zur Detektion von Schmutz und/oder Feuchtigkeit auf einem optisch durchlässigen Körper, insbesondere auf einer Scheibe eines Kraftfahrzeugs, vorgesehen ist. Dabei ist auf dem Speicherelement ein Computerprogramm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Speicherelement abgespeichertes Programm realisiert, so dass dieses mit dem Computerprogramm versehene Speicherelement in gleicher Weise die Erfindung darstellt wie das Verfahren, zu dessen Ausführung das Programm geeignet ist. Als Speicherelement kann insbesondere ein elektrisches Speichermedium zur Anwendung kommen, bspw. ein Read-Only-Memory, ein Random-Access-Memory oder ein Flash-Memory.

Schließlich wird als noch eine weitere Lösung der Aufgabe der vorliegenden Erfindung ausgehend von dem Steuergerät der eingangs genannten Art vorgeschlagen, dass das Steuergerät Mittel zum Abspeichern von Ausgangswerten für Ansteuersignale für die Sendeelemente vor dem Betrieb des Sensors und Mittel zum Ermitteln einer statischen Regelabweichung aus der Differenz der aktuellen Werte für die Ansteuersignale und der Ausgangswerte während des Betriebs des Sensors aufweist.

Gemäß einer vorteilhaften Weiterbildung der vorliegenden Erfindung wird ein Computerprogramm vorgeschlagen dass auf dem Speicherelement abgespeichert ist und auf dem Rechengerät ablauffähig und zur Ausführung des erfindungsgemäßen Verfahrens geeignet ist.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Es zeigen:
- Figur 1: eine Seitenansicht eines erfindungsgemäßen Sensors zur Detektion von Feuchtigkeitstropfen und Schmutzpartikel auf der Außenseite einer Scheibeeines Kraftfahrzeugs bei trockener und sauberer Scheibe im Schnitt;
- Figur 2: eine Draufsicht auf einen erfindungsgemäßen Sensor;
- Figur 3: den Strahlengang eines Sendeelements des Sensors aus Figur 1 zur Detektion von Feuchtigkeitstropfen bei trockener Scheibe;
- Figur 4: den Stahlengang des Sendeelements aus Figur 3 bei nasser Scheibe;
- Figur 5: den Strahlengang eines Sendeelements des Sensors aus Figur 1 zur Detektion von Schmutzpartikel bei sauberer Scheibe;
- Figur 6: den Stahlengang des Sendeelements aus Figur 5 bei schmutziger Scheibe;
- Figur 7: einen Blockschaltplan einer Regelung, wie sie in einem erfindungsgemäßen Verfahren zur Detektion von Feuchtigkeitstropfen und Schmutzpartikel auf der Außenseite einer Scheibe eines Kraftfahrzeugs bei trockener und sauberer Scheibe realisiert ist;
- Figur 8: ein Ablaufdiagramm des erfindungsgemäßen Verfahens;
- Figur 9: einen einfachen Auswertealgorithmus zur Verarbeitung von Ausgangssignalen des Sensors; und
- Figur 10: ein erfindungsgemäßes Steuergerät für einen Sensor gemäß Figur 1.

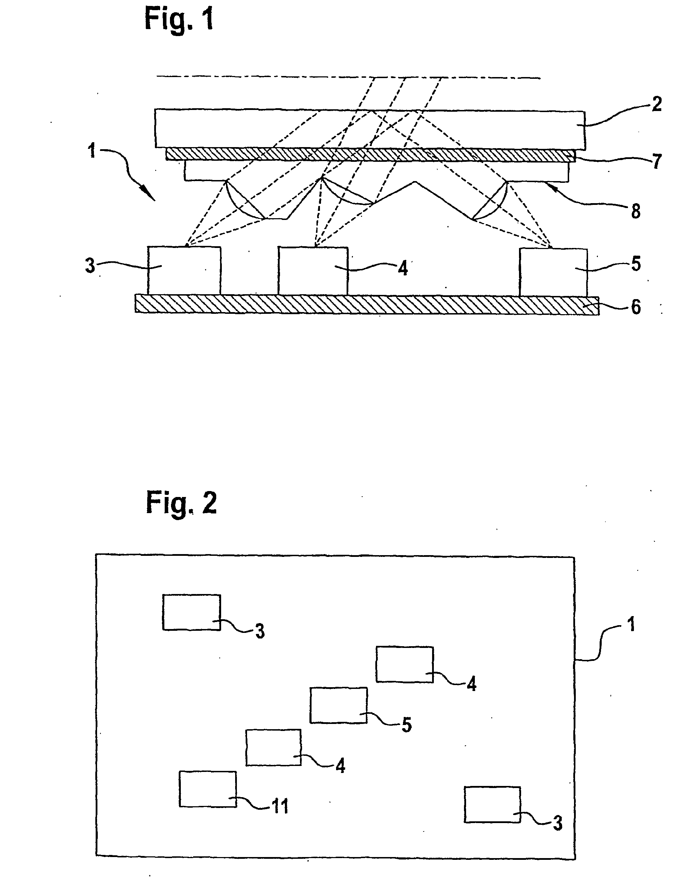

In Figur 1 ist einer erfindungsgemäßer Sensor zur Detektion von Feuchtigkeitstropfen und Schmutzpartikel auf der Außenseite einer Scheibe eines Kraftfahrzeugs in seiner Gesamtheit mit dem Bezugszeichen 1 bezeichnet. Die Scheibe ist mit dem Bezugszeichen 2 bezeichnet und kann eine beliebige Scheibe, insbesondere eine Windschutzscheibe oder eine Heckscheibe sein. Der Sensor 1 umfasst mehrere Sendeelemente 3, 4, von denen in Figur 1 nur zwei dargestellt sind, und ein Empfangselement 5, das von den Sendeelementen 3, 4 ausgesandte und von der Außenseite der Scheibe 2 reflektierte optische Strahlen empfängt. Die Sendeelemente 3, 4 sind als Lumineszenzdioden (LED) ausgebildet, die optische Strahlen im Infrarot (IR)-Frequenzbereich aussenden. Die IR-Doden haben enien Abstrahlwinkel von bspw. +/- 60°.

Die Sendeelemente 3, 4 und das Empfangselement 5 sind auf einer gedruckten Leiterplatte (printed circuit board, PCB) 6 befestigt und schaltungstechnisch in die elektrische Schaltung des Sensors 1 integriert. Auf der Innenseite der Scheibe 2 ist ein optisches Klebeband 7 und darauf wiederum ein Optikmodul 8 angeordnet, durch das die von den Sendeelementen 3, 4 ausgesandten Strahlen parallelisiert werden, so dass mehr Strahlen auf das Empfangselement 5 treffen und die Lichtstärke des Empfangssignals größer ist. Das Klebeband 7 dient als Koppelelement und hat näherungsweise den gleichen Brechungsindex wie das Glas der Scheibe 2, so dass Lichtstrahlen beim .Übergang von dem Klebeband 7 in die Scheibe 2 keine zusätzliche Brechung erfahren. Der erfindungsgemäße Sensor 1 funktioniert jedoch auch ohne das in Figur 1 dargestellte Optikmodul 8.

Der erfindungsgemäße Sensor 1 kann Regen und Schmutz auf der Scheibe 2 detektieren. In Abhängigkeit von einem Ausgangssignal des Sensors 1 bzw. der daran angeschlossenen Auswerteelektronik wird das Wisch- bzw. Waschsystem der Scheibe 2 automatisch aktiviert. Durch den Sensor 1 kann die Sicherheit in einem Kraftfahrzeug entscheidend verbessert werden, da eine beliebige Sichtbehinderung durch Regen, Eis, Schnee oder Schmutz frühzeitig erkannt und automatisch, frühzeitig und wirkungsvoll beseitigt werden kann.

Der erfindungsgemäße Sensor 1 ist als ein sog. On-the-glass-Sensor ausgebildet, der unmittelbar, d.h. ohne Luftstrecken zwischen den Sende-/Empfangselementen 3, 4, 5 und der Scheibe 2, an der Innenseite der Scheibe 2 befestigt ist. Dadurch kann ein negativer Einfluss durch eine von Innen beschlagene Scheibe 2 verhindert werden. Es kann auf ein Optikmodul 8 verzichtet werden, was zu Kosteneinsparungen führt. Die Auswerteelektronik für die Ausgangssignale des Sensors 1 sitzt direkt an dem Sensor 1 und wird zusammen mit dem Sensor 1 an der Scheibe 2 befestigt.

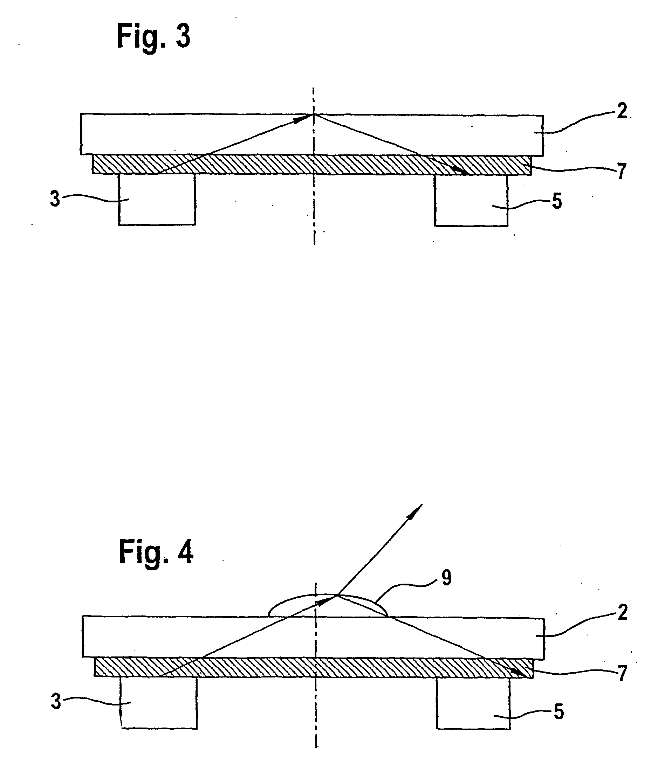

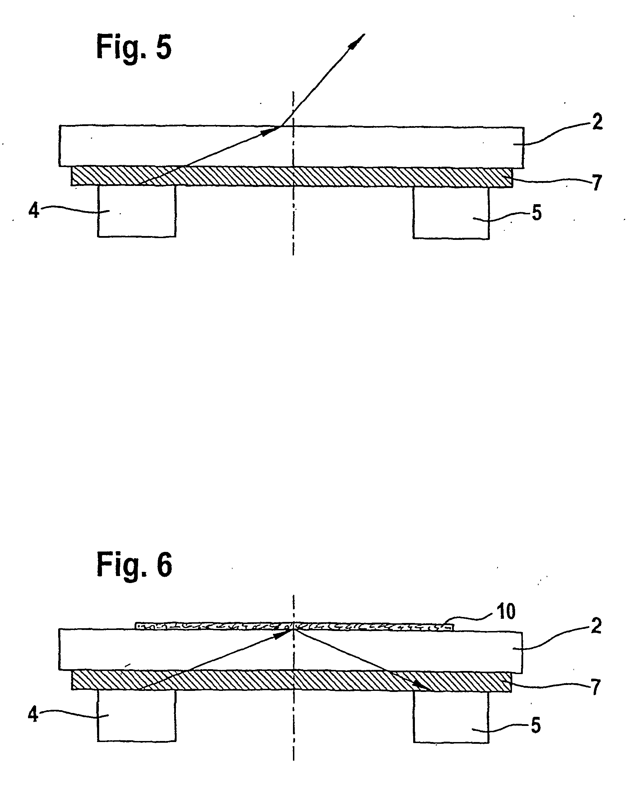

In Figur 1 ist deutlich zu erkennen, dass die von dem Sendeelement 3 ausgesandten Lichtstrahlen bei trockener und sauberer Scheibe 2 zum Großteil an der Außenseite der Scheibe 2 auf das Empfangselement 5 reflektiert werden (vgl. Figur 3). Wenn auf der Außenseite der Scheibe 2 jedoch ein Feuchtigkeitstropfen 9 vorliegt (vgl. Figur 4), wird ein Teil der von dem Sendeelement 3 ausgesandten Lichtstrahlen an der Außenseite des Tropfens 9 ausgekoppelt oder derart reflektiert, dass die reflektierten Lichtstrahlen nicht auf das Empfangselement 5 treffen. Ebenso ist in Figur 1 zu erkennen, dass die von dem Sendeelement 4 ausgesandten Lichtstrahlen zum Großteil an der Außenseite der Scheibe 2 aus dieser ausgekoppelt werden und nicht auf das Empfangselement 5 treffen (vgl. Figur 5). Wenn auf der Außenseite der Scheibe 2 jedoch ein Schmutzfilm bestehend aus einer Vielzahl von Schmutzpartikeln 10 vorliegt (vgl. Figur 6), wird ein Großteil der von dem Sendeelement 4 ausgesandten Lichtstrahlen an der Außenseite der Scheibe 2 auf das Empfangselement 5 reflektiert. Das Sendeelement 3 dient also zur Detektion von Feuchtigkeitstropfen auf der Scheibe 2, und das Sendeelement 4 dient zur Detektion von Schmutzpartikeln auf der Scheibe 2.

In Figur 2 ist eine Draufsicht auf den Sensor 1 mit einer beispielhaften Anordnung der Sende-/Empfangselemente 3, 4, 5 dargestellt. Die Sendeelemente 3 sind zu einem ersten Sendezweig zusammengefasst, und die Sendeelemente 4 sind mit einem zusätzlichen Sendeelement 11 zu einem zweiten Sendezweig zusammengefasst. Der Abstand der Sendeelemente 3 für die Regenerkennung zu dem Empfangselement 5 wird über das Reflexionsgesetz berechnet. Der Abstand der Sendeelemente 4 für die Schmutzerkennung zu dem Empfangselement 5 ist kleiner, so dass die reflektierten Lichtstrahlen bei sauberer Scheibe 2 nicht auf das Empfangselement 5 treffen. Das Sendeelement 11 hat einen etwas kleineren Abstand als den Reflexionsabstand zu dem Empfangselement 5. Dadurch wird von dem Sendeelement 11 auch bei sauberer und trockener Scheibe 2 ein gewisser Anteil der Strahlen auf das Empfangselement 5 reflektiert.

In der Auswerteelektronik des Sensors 1 wird die Sendeleistung der Sendeelemente 3, 4, 11 derart variiert, dass die Leistung der an dem Empfangselement 5 empfangenen, von den Sendeelementen 3 des ersten Sendezweigs ausgesandten optischen Strahlen gleich der Leistung der an dem Empfangselement 5 empfangenen, von den Sendeelementen 4, 11 des zweiten Sendezweigs ausgesandten optischen Strahlen ist. Es wird also die Sendeleistung der Sendeelemente 3, 4, 11 derart geregelt, dass die empfangene Lichtleistung des ersten Sendezweigs gleich der empfangenen Lichtleistung des zweiten Sendezweigs ist. Zwischen beiden Zweigen wird aus den empfangenen Signalen eine Differenz (dynamische Regelabweichung) gebildet. Die Differenz entsteht durch die Einwirkung der Regentropfen 9 bzw. der Schmutzpartikel 10 auf der Scheibe 2 und wird durch die Regelung wieder ausgeglichen. So lange eine dynamische Regelabweichung anliegt wird das Ausgangssignal erzeugt. In Abhängigkeit von dem Ausgangssignal wird ein pulsweiten- und frequenzmoduliertes (PWM)-Signal erzeugt, das abhängig ist von der Anzahl und der Größe der Regentropfen 9. Durch die Leistungsregelung können die Auswirkungen von sich langsam ändernden Störsignalen, bspw. aufgrund von Bauteilalterungen oder Kratzer auf der Scheibe 2, ausgeregelt werden. Der Sensor 1 wird also immer in seinem Arbeitspunkt betrieben. Das zusätzliche Sendeelement 11 dient dazu, den Regelkreis über die Ansteuerschaltungen der Sendeelemente 4, 11 des zweiten Sendezweigs und das Empfangselement 5 bei sauberer und trockener Scheibe 2 zu schließen.

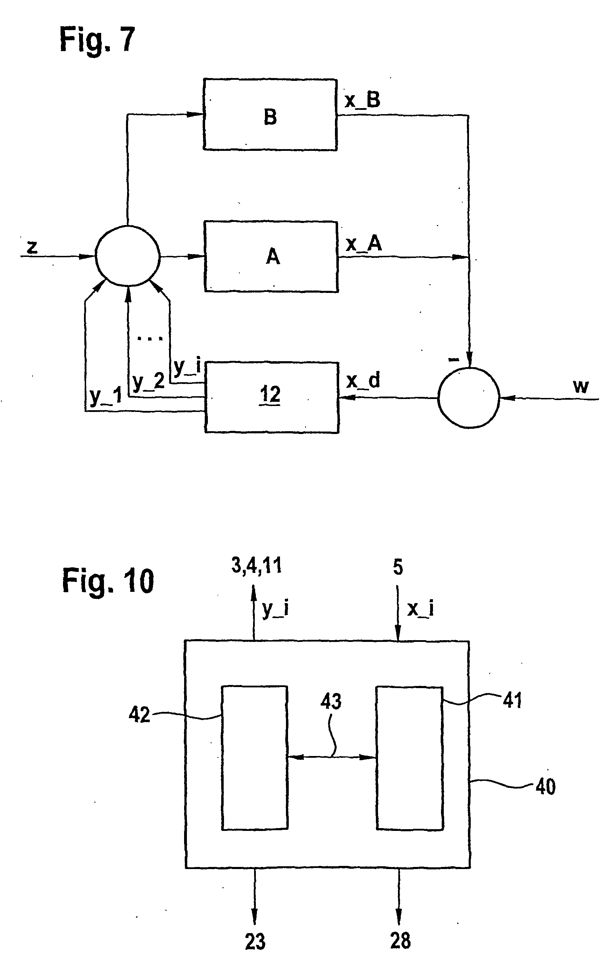

Die Sendeleistung der Sendeelemente 3, 4, 11 kann über ein Ansteuersignal (vgl. Stellgröße y_i in Figur 7) für die Sendeelemente 3, 4, 11, insbesondere über den Ansteuerstrom, variiert werden. Bei dem erfindungsgemäßen Sensor 1 wird zusätzlich zu der oben beschriebenen Leistungsregelung eine stationäre Regelabweichung x_ d_ stat bestimmt. Dazu werden vor dem Betrieb des Sensors 1 die Ausgangswerte der Ansteuersignale y_i_anf für die Sendeelemente 3, 4, 11 abgespeichert. Während des Betriebs des Sensors 1 werden dann die aktuellen Werte der Ansteuersignale y_i ermittelt und die Differenz zu den abgespeicherten Werten y_i_anf gebildet. Die Differenz y_i_anf - y_i entspricht der stationären Regelabweichung x_d_stat. So lange eine stationäre Regelabweichung anliegt bzw. so lange die stationäre Regelabweichung einen vorgebbaren Grenzwert überschreitet, wird ein Ausgangssignal erzeugt. In Abhängigkeit von dem Ausgangssignal wird ein weiteres pulsweiten- und frequenzmoduliertes (PWM)-Signal erzeugt, das u.a. abhängig ist von der Anzahl und der Größe der Schmutzpartikel 10. Bei dem erfindungsgemäßen Sensor 1 wird also der zur Nachregelung des Regelkreises notwendige Ansteuerstrom für die Sendeelemente 3, 4, 11 als Maß für die auf den Regelkreis wirkenden Störgrößen z herangezogen.

Der Blockschaltplan des entsprechenden Regelkreises ist in Figur 7 dargestellt. Die optischen Strecken (Regelstrecken) der Sendezweige sind mit A und B bezeichnet. Die Lichtleistung (Regelgröße) ist mit x_A bzw. x_B bezeichnet. Die Führungsgröße ist mit w bezeichnet. Die dynamische Regelabweichung als Differenz von Sollwert w und Istwert x_A, x_B ist mit x_d bezeichnet. Ein Regler 12 führt die Regelung der Lichtleistung x_A = x_B aus. Das Ausgangssignal des Reglers 12 sind verschiedene Ansteuerströme y_i (Stellgröße), die auf die Sendeelemente 3 bzw. 4, 11 der Sendezweige A bzw.

B wirken. Außerdem wirken auf die Sendezweige A, B verschiedene Störgrößen z.

Von Zeit zu Zeit oder ereignisorientiert (wenn bspw. bestimmte Reinigungsmaßnahmen nicht den gewünschtn Erfolg haben) kann es erforderlich sein, neue Ausgangswerte für die Ansteuersignale zu speichern, d.h. den Sensor 1 zu kalibrieren. Auf diese Weise kann verhindert werden, dass Kratzer auf der Scheibe 2 oder eine Alterung der Bauteile des Sensors 1 zu einer falschen Detektion von Schmutzpartikeln 10 auf der Außenseite der Scheibe 2 führt. Es ist auch denkbar, den Sensor 1 durch einen Temperaturfühler (nicht dargestellt) zu ergänzen und das Ausgangssignal des Temperaturfühlers bei der Bewertung und Verarbeitung der Ausgangssignale des Sensors 1 heranzuziehen. Als Temperaturfühler eignet sich insbesondere ein Themeroelement, ein PT100 oder ein Halbleiterbauelement. Mit Hilfe des Temperaturfühlers kann Eis und Schnee auf der Scheibe 2 detektiert werden, und es können geeignete Maßnahmen zur Beseitigung ergriffen werden.

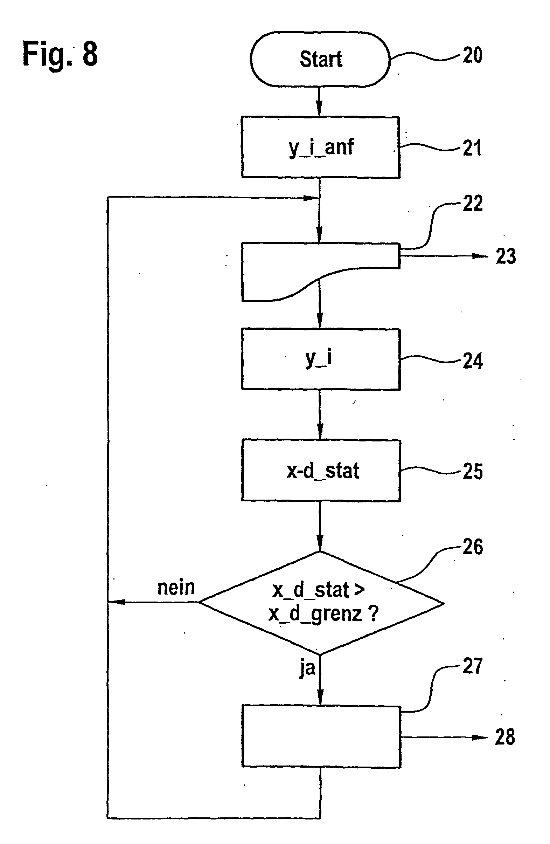

In Figur 8 ist ein Ablaufdiagramm des erfindungsgemäßen Verfahrens dargestellt. Es beginnt in einem Funktionsblock 20. In einem Funktionsblock 21 werden vor dem Betrieb des Sensors 1 Ausgangswerte y_i_anf für die Ansteuersignale y_i der Sendeelemente 3, 4, 11 abgespeichert. Dann wird in einem Funktionsblock 22 die oben beschriebene Regelung der Lichtleistung ausgeführt. Durch einen geeignenten Algorithmus wird das von der Anzahl und der Größe der Regentropfen 9 abhängige PWM-Signal 23 erzeugt und ausgegeben. In einem Funktionsblock 24 werden dann während des Betriebs des Sensors 1 die aktuellen Werte für die Ansteuersignale y_i erfasst. Anschließend wird in einem Funktionsblock 25 die stationäre Regeldifferenz x_d_stat aus der Differenz der Ausgangswerte y_i_anf und der aktuellen Werte y_i der Ansteuersignale ermittelt. In einem Abfrageblock 26 wird überprüft, ob die ermittelte stationäre Regeldifferenz x_d_stat oberhalb eines vorgebbaren Grenzwerts x_d_grenz liegt. Falls nein, wird wieder zu dem Funktionsblock 22 verzweigt und das Verfahren dort fortgesetzt. Anderenfalls wird in einem Funktionsblock 27 das weitere von der Anzahl und der Größe der Schmutzpartikel 10 abhängige PWM-Signal 28 anhand eines geeigneten Algorithmus erzeugt und ausgegeben. Anschließend wird zu dem Funktionsblock 22 verzweigt und das Verfahren dort fortgesetzt.

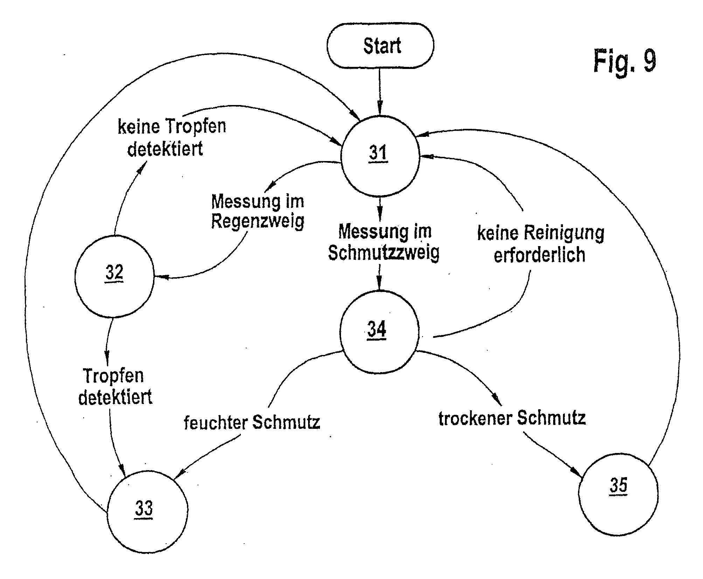

In Figur 9 ist ein beispielhafter Auswertealgorithmus für die Ausgangssignale des Sensors 1 anhand eines Zustanddiagramms dargestellt. Der Algorithmus beginnt in einem Zustand 30 und geht dann in einen Zustand 31 über, in dem mit der Messung durch den Sensor 1 begonnen wird. Für eine Messung in dem ersten Sendezweig wird in einen Zustand 32 übergegangen, in dem die Außenseite der Scheibe 2 auf Feuchtigkeitstropfen 9 untersucht wird. Falls keine Tropfen 9 detektiert werden, wird aus dem Zustand 32 wieder in den Zustand 31 übergegangen. Anderenfalls wird aus dem Zustand 32 in einen Zustand 33 übergegangen, in dem die Scheibe 2 gewischt wird. Nach dem Wischen geht der Algorithmus wieder in den Zustand 31 über.

Für eine Messung in dem zweiten Sendezweig wird in einen Zustand 34 übergegangen, in dem die Außenseite der Scheibe 2 auf Feuchtigkeitstropfen 9 und auf Schmutzpartikel 10 untersucht wird. Falls keine Schmutzpartikel 10 detektiert werden, wird aus dem Zustand 34 wieder in den Zustand 31 übergegangen. Falls feuchte Schmutzpartikel 10 auf der Scheibe 2 detektiert werden, wird aus dem Zustand 34 in den Zustand 33 übergegangen, in dem die Scheibe 2 gewischt wird. Nach dem Wischen geht der Algorithmus wieder in den Zustand 31 über. Falls trockene Schmutzpartikel 10 auf der Scheibe 2 detektiert werden, wird aus dem Zustand 34 in einen Zustand 35 übergegangen, in dem die Scheibe 2 gewaschen und gewischt wird. Nach dem Waschen und Wischen geht der Algorithmus wieder in den Zustand 31 über.

In Figur 10 ist ein erfindungsgemäßes Steuergerät in seiner Gesamtheit mit dem Bezugszeichen 40 bezeichnet. Das Steuergerät 40 ist für den Sensor 1 zur Detektion von Feuchtigkeitstropfen 9 uns Schmutzpartikel 10 auf der Scheibe 2 vorgesehen. Das Steuergerät 40 umfasst ein Rechengerät 41, insbesondere einen Mikroprozessor, und ein Speicherelement 42. Das Speicherelement ist vorzugsweise als ein Flash-Memory ausgebildet. Auf dem Speicherelement ist ein auf dem Rechengerät 41 ablauffähiges und zur Ausführung des erfindungsgemäßen Verfahrens geeignetes Computerprogramm abgespeichert. Zur Ausführung des Computerprogramms wird dieses über eine Datenverbindung 43 entweder als ganzes oder abschnitts- oder befehlsweise aus dem Speicherelement 42 in das Rechengerät 41 übertragen. Das Steuergerät 40 empfängt u.a. Signal x_i von dem Empfangselement 5, das der Lichtleistung der empfangen Lichstrahlen der Sendezweige A, B entspricht. In Abhängigkeit von dem empfangenen Signal x_ i werden Ansteuersignale y_i für die Sendeelemente 3, 4, 11 generiert und an diese bzw. an Endstufen für die Sendeelemente 3, 4, 11 ausgegeben. Das Steuergerät 40 gibt außerdem die PWM-Signale 23 und 28 aus, die Informationen über die Anzahl und Größe von auf der Scheibe 2 detektierten Feuchtigkeitstropfen 9 und Schmutzpartikel 10 enthalten.

## Patentansprüche

1. Sensor zur Detektion von Schmutz und/oder Feuchtigkeit auf einer Außenseite eines optisch durchlässigen Körpers (2), wobei der Sensor (1) auf der Innenseite des Körpers (2) angeordnet ist und mehrere optische Sendeelemente (3, 4, 11) und mindestens ein optisches Empfangselement (5) aufweist und die Sendeelemente (3, 4, 11) zu mindestens zwei Sendezweigen (A, B) zusammengefasst sind, die zusammen mit dem mindestens einen Empfangselement (5) in einem Regelkreis geschaltet sind, der für eine zweigweise Variation der Sendeleistung der Sendeelemente (3, 4, 11) mit dem Ziel sorgt, die Lichtleistung der von dem Empfangselement (5) empfangenen, von dem mindestens einen Sendeelement (3) des ersten Sendezweigs (A) ausgesandten und an der Außenseite des optisch durchlässigen Körpers (2) reflektierten Strahlen gleich der Lichtleistung der von dem Empfangselement (5) empfangenen, von dem mindestens einen Sendeelement (4, 11) des zweiten Sendezweigs (B) ausgesandten reflektierten Strahlen zu regeln, **dadurch gekennzeichnet, dass** der Sensor (1) Mittel zum Abspeichern von Ausgangswerten (y_i_anf) für Ansteuersignale für die Sendeelemente (3, 4, 11) vor dem Betrieb des Sensors (1) und Mittel zum Ermitteln einer statischen Regelabweichung (x_d_stat) aus der Differenz der aktuellen Werte (y_i) für die Ansteuersignale und der abgespeicherten Ausgangswerte (y_i_anf) während des Betriebs des Sensors (1) aufweist.

2. Sensor nach Anspruch 1, **dadurch gekennzeichnet, dass** mindestens ein Sendeelement (3) des ersten Sendezweigs (A) derart ausgerichtet ist, dass ein Großteil der von dem Sendeelement (3) ausgesandten optischen Strahlen ohne Feuchtigkeitstropfen (9) an der Außenseite des Körpers (2) auf das mindestens eine Empfangselement (5) reflektiert wird, und mindestens ein Sendeelement (4) des zweiten Sendezweigs (B) derart ausgerichtet ist, dass ein Großteil der von dem weiteren Sendeelement (4) ausgesandten optischen Strahlen ohne Schmutzpartikel (10) auf der Außenseite des Körpers (2) an der Außenseite aus dem Körper (2) ausgekoppelt wird.

3. Sensor nach Anspruch 2, **dadurch gekennzeichnet, dass** die von dem mindestens einen Sendeelement (3) ausgesandten optischen Strahlen beim Auftreffen auf Feuchtigkeitstropfen (9) auf der Außenseite des Körpers (2) zumindest teilweise aus dem Körper (2) ausgekoppelt werden.

4. Sensor nach Anspruch 2 oder 3, **dadurch gekennzeichnet, dass** die von dem mindestens einen weiteren Sendeelement (4) ausgesandten optischen Strahlen beim Auftreffen auf Schmutzpartikel (10) auf der Außenseite des Körpers (2) zumindest teilweise an der Außenseite des Körpers (2) auf das mindestens eine Empfangselement (5) reflektiert werden.

5. Sensor nach einem der Ansprüche 2 bis 4, **dadurch gekennzeichnet, dass** in dem ersten Sendezweig (A) diejenigen Sendeelemente (3) zusammengefasst sind, die derart ausgerichtet sind, dass ein Großteil der von diesen Sendeelementen (3) ausgesandten optischen Strahlen ohne Feuchtigkeitstropfen (9) an der Außenseite des Körpers (2) auf das mindestens eine Empfangselement (5) reflektiert wird, und in dem zweiten Sendezweig (B) die weiteren Sendeelemente (4) zusammengefasst sind, die derart ausgerichtet sind, dass ein Großteil der von den weiteren Sendeelementen (4) ausgesandten optischen Strahlen ohne Schmutzpartikel (10) auf der Außenseite des Körpers (2) an der Außenseite aus dem Körper (2) ausgekoppelt wird.

6. Sensor nach Anspruch 5, **dadurch gekennzeichnet, dass** in dem zweiten Sendezweig (B) mindestens ein zusätzliches Sendeelement (11) vorgesehen ist, das derart ausgerichtet ist, dass ein Anteil der von dem zusätzlichen Sendeelement (11) ausgesandten optischen Strahlen ohne Schmutzpartikel (10) an der Außenseite des Körpers (2) auf das mindestens eine Empfangselement (5) reflektiert wird.

7. Sensor nach einem der Ansprüche 1 bis 6, **dadurch gekennzeichnet, dass** die Sendeelemente (3, 4, 11) einzeln oder zu mehreren nacheinander optische Strahlen aussenden und das oder jedes Empfangselement (5) synchron zum Aussenden der optischen Strahlen durch die sendenden Sendeelemente (3, 4, 11) an der Außenseite des optisch durchlässigen Körpers (2) reflektierte Strahlen empfängt und diese einer Auswertung zuführt.

8. Verfahren zum Betrieb eines Sensors zur Detektion von Schmutz und/oder Feuchtigkeit auf einer Außenseite eines optisch durchlässigen Körpers (2), wobei der Sensor (1) mehrere optische Sendeelemente (3, 4, 11) und mindestens ein Empfangselement (5) aufweist und bei dem Verfahren die Sendeelemente (3, 4, 11) zu mindestens zwei Sendezweigen (A, B) zusammengefasst werden, die zusammen mit dem mindestens einen Empfangselement (5) in einem Regelkreis geschaltet werden, durch den die Sendeleistung der Sendeelemente (3, 4, 11) mit dem Ziel zweigweise variiert wird, die Lichtleistung der von dem Empfangselement (5) empfangenen, von dem mindestens einen Sendeelement (3) des ersten Sendezweigs (A) ausgesandten und an der Außenseite des optisch durchlässigen Körpers (2) reflektierten Strahlen gleich der Lichtleistung der von dem Empfangselement (5) empfangenen, von dem mindestens einen Sendeelement (4, 11) des zweiten Sendezweigs (B) ausgesandten reflektierten Strahlen zu regeln, **dadurch gekennzeichnet, dass** vor dem Betrieb des Sensors (1) Ausgangswerte (y_i_anf) für Ansteuersignale für die Sendeelemente (3, 4, 11) abgespeichert werden und während des Betriebs des Sensors (1) eine statische Regelabweichung (x_d_stat) aus der Differenz der aktuellen Werte (y_i) für die Ansteuersignale und der Ausgangswerte (y_i_anf) ermittelt wird.

9. Computerprogramm, welches auf einem Speicherelement (42), insbesondere Read-Only-Memory, Random-Access-Memory oder Flash-Memory, für ein Steuergerät (40) eines Sensors (1) zur Detektion von Schmutz und /oder Feuchtigkeit auf einem optisch durchlässigen Körper abspeicherbar ist und zur Ausführung eines Verfahrens nach Anspruch 8 geeignet ist, wenn das Computerprogramm auf einem Rechengerät (41), insbesondere auf einem Mikroprozessor abläuft.

10. Steuergerät (40) für einen Sensor (1) zur Detektion von Schmutz und/oder Feuchtigkeit auf einem optisch durchlässigen Körper (2) mit einem Rechengerät (41), insbesondere einem Mikroprozessor, und einem Speicherelement (42), wobei der Sensor (1) mehrere optische Sendeelemente (3, 4, 11) und mindestens ein Empfangselement (5) aufweist und die Sendeelemente (3, 4, 11) zu mindestens zwei Sendezweigen (A, B) zusammengefasst sind, die zusammen mit dem mindestens einen Empfangselement (5) in einem Regelkreis geschaltet sind, der für eine zweigweise Variation der Sendeleistung der Sendeelemente (3, 4, 11) mit dem Ziel sorgt, die Lichtleistung der von dem Empfangselement (5) empfangenen, von dem mindestens einen Sendeelement (3) des ersten Sendezweigs (A) ausgesandten und an der Außenseite des optisch durchlässigen Körpers (2) reflektierten Strahlen gleich der Lichtleistung der von dem Empfangselement (5) empfangenen, von dem mindestens einen Sendeelement (4, 11) des zweiten Sendezweigs (B) ausgesandten reflektierten Strahlen zu regeln, **dadurch gekennzeichnet, dass** das Steuergerät (40) Mittel zum Abspeichern von Ausgangswerten (y_i_anf) für Ansteuersignale für die Sendeelemente (3, 4, 11) vor dem Betrieb des Sensors (1) und Mittel zum Ermitteln einer statischen Regelabweichung (x_d_stat) aus der Differenz der aktuellen Werte (y_i) für die Ansteuersignale und der Ausgangswerte (y_i_anf) während des Betriebs des Sensors (1) aufweist.

11. Steuergerät (40) nach Anspruch 10, **dadurch gekennzeichnet, dass** auf dem Speicherelement (42) ein Computerprogramm abgespeichert ist, das auf dem Rechengerät (41) ablauffähig und zur Ausführung eines Verfahrens nach Anspruch 8 geeignet ist.

## Claims

1. Sensor for detecting dirt and/or moisture on an outer side of an optically transparent body (2), wherein the sensor (1) is arranged on the inner side of the body (2) and has a number of optical transmitting elements (3, 4, 11) and at least one optical receiving element (5) and the transmitting elements (3, 4, 11) are combined to form at least two transmitting branches (A, B) which, together with the at least one receiving element (5), are connected in a control circuit which ensures a branch-wise variation of the transmitting power of the transmitting elements (3, 4, 11) with the aim of regulating the luminous power of the beams received by the receiving element (5), emitted by the at least one transmitting element (3) of the first transmitting branch (A) and reflected at the outer side of the optically transparent body (2) to be the same as the luminous power of the reflected beams received by the receiving element (5) and emitted by the at least one transmitting element (4, 11) of the second transmitting branch (B), **characterized in that** the sensor (1) has means for storing initial values (y_i_anf) for control signals for the transmitting elements (3, 4, 11) prior to operation of the sensor (1) and means for determining a static control deviation (x_d_stat) from the difference between the current values (y_i) for the control signals and the stored initial values (y_i_anf) during operation of the sensor (1).

2. Sensor according to Claim 1, **characterized in that** at least one transmitting element (3) of the first transmitting branch (A) is oriented in such a way that, without drops of moisture (9) on the outer side of the body (2), most of the optical beams emitted by the transmitting element (3) are reflected onto the at least one receiving element (5), and at least one transmitting element (4) of the second transmitting branch (B) is oriented in such a way that, without dirt particles (10) on the outer side of the body (2), most of the optical beams emitted by the further transmitting element (4) are deflected at the outer side out of the body (2).

3. Sensor according to Claim 2, **characterized in that** the optical beams emitted by the at least one transmitting element (3) are at least partially deflected out of the body (2) when they encounter drops of moisture (9) on the outer side of the body (2).

4. Sensor according to Claim 2 or 3, **characterized in that** the optical beams emitted by the at least one further transmitting element (4) are at least partially reflected at the outer side of the body onto the at least one receiving element (5) when they encounter dirt particles (10) on the outer side of the body (2).

5. Sensor according to any of Claims 2 to 4, **characterized in that** combined in the first transmitting branch (A) are those transmitting elements (3) which are oriented in such a way that, without drops of moisture (9) on the outer side of the body (2), most of the optical beams emitted by these transmitting elements (3) are reflected onto the at least one receiving element (5), and combined in the second transmitting branch (B) are the further transmitting elements (4) which are oriented in such a way that, without dirt particles (10) on the outer side of the body (2), most of the optical beams emitted by the further transmitting elements (4) are deflected at the outer side out of the body (2).

6. Sensor according to Claim 5, **characterized in that** provided in the second transmitting branch (B) is at least one additional transmitting element (11) which is oriented in such a way that, without dirt particles (10) on the outer side of the body (2), some of the optical beams emitted by the additional transmitting element (11) are reflected onto the at least one receiving element (5) .

7. Sensor according to any of Claims 1 to 6, **characterized in that** the transmitting elements (3, 4, 11) emit optical beams individually or in groups in succession and the or each receiving element (5), synchronously with the emission of the optical beams by the transmitting elements (3, 4, 11), receives beams reflected at the outer side of the optically transparent body (2) and supplies them for evaluation.

8. Method for operating a sensor for detecting dirt and/or moisture on an outer side of an optically transparent body (2), wherein the sensor (1) has a number of optical transmitting elements (3, 4, 11) and at least one receiving element (5), and in the method the transmitting elements (3, 4, 11) are combined to form at least two transmitting branches (A, B) which, together with the at least one receiving element (5), are connected in a control circuit, through which the transmitting power of the transmitting elements (3, 4, 11) is varied in a branch-wise manner with the aim of regulating the luminous power of the beams received by the receiving element (5), emitted by the at least one transmitting element (3) of the first transmitting branch (A) and reflected at the outer side of the optically transparent body (2) to be the same as the luminous power of the reflected beams received by the receiving element (5) and emitted by the at least one transmitting element (4, 11) of the second transmitting branch (B), **characterized in that** initial values (y_i_anf) for control signals for the transmitting elements (3, 4, 11) are stored prior to operation of the sensor (1) and a static control deviation (x_d_stat) from the difference between the current values (y_i) for the control signals and the initial values (y_i_anf) is determined during operation of the sensor (1).

9. Computer program which can be stored on a memory element (42), in particular a Read-Only Memory, a Random-Access Memory or a flash memory, for a control unit (40) of a sensor (1) for detecting dirt and/or moisture on an optically transparent body, said computer program being suitable for implementing a method according to Claim 8 when the computer program runs on a computer (41), in particular on a microprocessor.

10. Control unit (40) for a sensor (1) for detecting dirt and/or moisture on an optically transparent body (2), having a computer (41), in particular a microprocessor, and a memory element (42), wherein the sensor (1) has a number of optical transmitting elements (3, 4, 11) and at least one receiving element (5) and the transmitting elements (3, 4, 11) are combined to form at least two transmitting branches (A, B) which, together with the at least one receiving element (5), are connected in a control circuit which ensures a branch-wise variation of the transmitting power of the transmitting elements (3, 4, 11) with the aim of regulating the luminous power of the beams received by the receiving element (5), emitted by the at least one transmitting element (3) of the first transmitting branch (A) and reflected at the outer side of the optically transparent body (2) to be the same as the luminous power of the reflected beams received by the receiving element (5) and emitted by the at least one transmitting element (4, 11) of the second transmitting branch (B), **characterized in that** the control unit (40) has means for storing initial values (y_i_anf) for control signals for the transmitting elements (3, 4, 11) prior to operation of the sensor (1) and means for determining a static control deviation (x_d_stat) from the difference between the current values (y_i) for the control signals and the initial values (y_i_anf) during operation of the sensor (1).

11. Control unit (40) according to Claim 10, **characterized in that** stored on the memory element (42) is a computer program which can run on the computer (41) and is suitable for implementing a method according to Claim 8.

## Revendications

1. Capteur pour détecter des salissures et/ou de l'humidité sur un côté extérieur d'un corps optiquement transparent (2), le capteur (1) étant disposé sur le côté intérieur du corps (2) et comprenant plusieurs éléments optiques d'émission (3, 4, 11) et au moins un élément optique de réception (5), et les éléments d'émission (3, 4, 11) étant rassemblés pour former au moins deux branches d'émission (A, B) qui sont interconnectées avec l'au moins un élément de réception (5) pour former un circuit de régulation qui assure une variation par branche de la puissance d'émission des éléments d'émission (3, 4, 11) avec pour objectif de réguler la puissance lumineuse des rayons reçus par l'élément de réception (5), émis par l'au moins un élément d'émission (3) de la première branche d'émission (A) et réfléchis sur le côté extérieur du corps optiquement transparent (2) pour la rendre égale à la puissance lumineuse des rayons réfléchis reçus par l'élément de réception (5) et émis par l'au moins un élément d'émission (4, 11) de la deuxième branche d'émission (B), **caractérisé en ce que** le capteur (1) comprend des moyens pour mémoriser avant le fonctionnement du capteur (1) des valeurs de sortie (y_i_anf) pour des signaux d'activation pour les éléments d'émission (3, 4, 11) et des moyens pour déterminer pendant le fonctionnement du capteur (1) une dérive statique normale (x_d_stat) à partir de la différence entre les valeurs actuelles (y_i) pour les signaux d'activation et les valeurs de sortie mémorisées (y_i_anf) .

2. Capteur selon la revendication 1, **caractérisé en ce qu'**au moins un élément d'émission (3) de la première branche d'émission (A) est orienté de telle façon qu'en l'absence de gouttes d'humidité (9) sur le côté extérieur du corps (2), une grande partie des rayons optiques émis par l'élément d'émission (3) est réfléchie sur l'au moins un élément de réception (5) et **en ce qu'**au moins un élément d'émission (4) de la deuxième branche d'émission (B) est orienté de telle façon qu'en l'absence de particules de salissures (10) sur le côté extérieur du corps (2), une grande partie des rayons optiques émis par l'autre élément d'émission (4) est expulsée hors du corps (2) par le côté extérieur.

3. Capteur selon la revendication 2, **caractérisé en ce que**, lorsqu'ils touchent des gouttes d'humidité (9) se trouvant sur le côté extérieur du corps (2), les rayons optiques émis par l'au moins un élément d'émission (3) sont expulsés au moins partiellement hors du corps (2).

4. Capteur selon la revendication 2 ou 3, **caractérisé en ce que**, lorsqu'ils touchent des particules de salissures (10) se trouvant sur le côté extérieur du corps (2), les rayons optiques émis par l'au moins un autre élément d'émission (4) sont réfléchis au moins partiellement sur le côté extérieur du corps (2) vers l'au moins un élément de réception (5) .

5. Capteur selon l'une quelconque des revendications 2 à 4, **caractérisé en ce que** dans la première branche d'émission (A) sont rassemblés les éléments d'émission (3) qui sont orientés de telle façon qu'en l'absence de gouttes d'humidité (9) sur le côté extérieur du corps (2), une grande partie des rayons optiques émis par ces éléments d'émission (3) est réfléchie sur l'au moins un élément de réception (5) et **en ce que** dans la deuxième branche d'émission (B) sont rassemblés les autres éléments d'émission (4) qui sont orientés de telle façon qu'en l'absence de particules de salissures (10) sur le côté extérieur du corps (2), une grande partie des rayons optiques émis par les autres éléments d'émission (4) est expulsée hors du corps (2) par le côté extérieur.

6. Capteur selon la revendication 5, **caractérisé en ce que** dans la deuxième branche d'émission (B) est prévu au moins un élément d'émission supplémentaire (11) qui est orienté de telle façon qu'en l'absence de particules de salissures (10) sur le côté extérieur du corps (2), une partie des rayons optiques émis par l'élément d'émission supplémentaire (11) est réfléchie sur l'au moins un élément de réception (5).

7. Capteur selon l'une quelconque des revendications 1 à 6, **caractérisé en ce que** les éléments d'émission (3, 4, 11) émettent individuellement ou à plusieurs successivement des rayons optiques et **en ce que**, de manière synchrone par rapport à l'émission des rayons optiques par les éléments d'émission (3, 4, 11) assurant l'émission, l'élément de réception (5) ou chaque élément de réception (5) reçoit des rayons optiques réfléchis sur le côté extérieur du corps optiquement transparent (2) et dirige ceux-ci vers une unité d'exploitation.

8. Procédé pour assurer le fonctionnement d'un capteur pour détecter des salissures et/ou de l'humidité sur un côté extérieur d'un corps optiquement transparent (2), le capteur (1) comprenant plusieurs éléments optiques d'émission (3, 4, 11) et au moins un élément de réception (5) et les éléments d'émission (3, 4, 11) étant, avec ce procédé, rassemblés pour former au moins deux branches d'émission (A, B) qui sont interconnectées avec l'au moins un élément de réception (5) pour former un circuit de régulation avec lequel la puissance d'émission des éléments d'émission (3, 4, 11) est variée par branche avec pour objectif de réguler la puissance lumineuse des rayons reçus par l'élément de réception (5), émis par l'au moins un élément d'émission (3) de la première branche d'émission (A) et réfléchis sur le côté extérieur du corps optiquement transparent (2) pour la rendre égale à la puissance lumineuse des rayons réfléchis reçus par l'élément de réception (5) et émis par l'au moins un élément d'émission (4, 11) de la deuxième branche d'émission (B), **caractérisé en ce qu'**avant le fonctionnement du capteur (1), des valeurs de sortie (y_i_anf) pour des signaux d'activation pour les éléments d'émission (3, 4, 11) sont mémorisées et que pendant le fonctionnement du capteur (1) une dérive statique normale (x_d_stat) est déterminée à partir de la différence entre les valeurs actuelles (y_i) pour les signaux d'activation et les valeurs de sortie (y_i_anf).

9. Programme d'ordinateur qui peut être mémorisé sur un élément de mémorisation (42), en particulier une mémoire morte (ROM), une mémoire vive (RAM) ou une mémoire flash, pour une unité de commande (40) d'un capteur (1) pour détecter des salissures et/ou de l'humidité sur un corps optiquement transparent (2), et qui est adapté pour la réalisation d'un procédé selon la revendication 8 lorsque le programme d'ordinateur se déroule sur une unité de calcul (41), en particulier sur un microprocesseur.

10. Unité de commande (40) pour un capteur (1) pour détecter des salissures et/ou de l'humidité sur un corps optiquement transparent (2), avec une unité de calcul (41), en particulier un microprocesseur, et un élément de mémorisation (42), le capteur (1) comprenant plusieurs éléments optiques d'émission (3, 4, 11) et au moins un élément de réception (5), et les éléments d'émission (3, 4, 11) étant rassemblés pour former au moins deux branches d'émission (A, B) qui sont interconnectées avec l'au moins un élément de réception (5) pour former un circuit de régulation, lequel assure une variation par branche de la puissance d'émission des éléments d'émission (3, 4, 11) avec pour objectif de réguler la puissance lumineuse des rayons reçus par l'élément de réception (5), émis par l'au moins un élément d'émission (3) de la première branche d'émission (A) et réfléchis sur le côté extérieur du corps optiquement transparent (2) pour la rendre égale à la puissance lumineuse des rayons réfléchis reçus par l'élément de réception (5) et émis par l'au moins un élément d'émission (4, 11) de la deuxième branche d'émission (B), **caractérisée en ce que** l'unité de commande (40) comprend des moyens pour mémoriser avant le fonctionnement du capteur (1) des valeurs de sortie (y_i_anf) pour des signaux d'activation pour les éléments d'émission (3, 4, 11) et des moyens pour déterminer pendant le fonctionnement du capteur (1) une dérive statique normale (x_d_stat) à partir de la différence entre les valeurs actuelles (y_i) pour les signaux d'activation et les valeurs de sortie (y_i_anf).

11. Unité de commande (40) selon la revendication 10, **caractérisée en ce que** sur l'élément de mémorisation (42) est mémorisé un programme d'ordinateur qui peut se dérouler sur l'unité de calcul (41) et qui est adapté pour la réalisation d'un procédé selon la revendication 8.
